# EUROPEAN PATENT SPECIFICATION

(11) **EP 2 989 367 B1**
(45) Date of publication and mention of the grant of the patent: **06.11.2019**
(21) Application number: 14723512.1
(22) Date of filing: 22.04.2014
(51) Int. Cl.: F16L 33/01, F16L 33/34

(54) **REINFORCING SLEEVE FOR A COUPLING, ASSEMBLY OF A REINFORCING SLEEVE AND A COUPLING, METHOD OF WELDING OF FOR INSTANCE A MULTI LAYER CONDUIT TO THE ASSEMBLY**
VERSTÄRKUNGSHÜLSE FÜR EINE KUPPLUNG, ANORDNUNG AUS EINER VERSTÄRKUNGSHÜLSE UND EINER KUPPLUNG UND VERFAHREN ZUM SCHWEISSEN EINER MEHRSCHICHTIGEN LEITUNG AN DIESE ANORDNUNG
MANCHON DE RENFORT POUR UN ACCOUPLEMENT, ASSEMBLAGE D'UN MANCHON DE RENFORT ET D'UN ACCOUPLEMENT, ET PROCÉDÉ DE SOUDAGE D'UN CONDUIT MULTICOUCHES, PAR EXEMPLE, SUR L'ASSEMBLAGE

(30) Priority: 22.04.2013 NL 2010686
(43) Date of publication of application: 02.03.2016
(73) Proprietor: Tersia B.V., 4704 RV Roosendaal (NL)
(72) Inventor: VAN DER DONK, Cornelis Augustinus, NL-4706 VM Roosendaal (NL)
(74) Representative: Grootscholten, Johannes A.M.
(86) International application number: PCT/NL2014/050259
(87) International publication number: WO 2014/175730

(56) References cited:
- WO-A1-2004/001270
- WO-A1-2012/030221
- DE-A1- 2 833 587
- GB-A- 869 437
- US-A- 1 920 449
- US-A- 4 469 357
- US-A1- 2011 204 624

## Description

The invention relates to a reinforcing sleeve for a coupling, for instance for multilayer conduits, particularly for a coupling suitable for socket welding (international term: polyfusion welding) of for instance multilayer conduits.

Multilayer conduits are applied for plastic conduit systems (PCS) and thus form an alternative to conduits of steel and copper. The conduits are used for, among other purposes, the supply and discharge of water, gas and chemical substances.

The great advantage of these multilayer conduits is that they can bend in form-retaining manner, in a manner similar to copper conduits, while they are in comparison much lighter in weight and less expensive. A good example are polyethylene pipes constructed from an aluminium layer with a layer of polyethylene on either side. Such pipes are flexible and have a proven strength for the intended applications. Particularly interesting are pipes based on PE-RT (PE-Raised Temperature, a product of Dowlex), which can withstand temperatures of 90-95°C and can be applied at pressures of up to 10 bar.

Polyfusion welding is a suitable technique for coupling multilayer conduits to each other by means of a coupling, wherein a coupling and an outer end of a conduit for coupling are heated, for instance with a welding mandrel or other heating apparatus, until the parts for coupling become plastic. In plastic state the two parts are then fused together by pressing or sliding the parts for coupling against or into each other and allowing them to cool.

Used as heat source in polyfusion welding is a lance, the outer end of which is provided with mountable heating elements, also known as a welding mandrel and weld bush. The welding mandrel and weld bush are shaped such that they fit onto the contact surfaces of the respective coupling tube of a coupling and a conduit outer end which have to be fused together. The technique has the advantages that simple tools can be used and that the operations can be performed quickly (each operation lasts only a few seconds).

A coupling for multilayer conduits has been described in an earlier application WO 2012/030221 from the same inventor(s), the coupling comprising a coupling pipe with an inner wall which is reinforced with an adjacent reinforcing layer of a greater strength than the coupling pipe itself. Conduits are arranged over and on an outer surface of this coupling pipe, for which purpose a weld bush is utilized to make this outer surface of the coupling pipe plastic. If desired, a welding mandrel is utilized roughly simultaneously to make an inner surface of the conduit plastic. In a final state assembled with the conduit the coupling pipe is then located between the reinforcing layer on the inner side thereof and the conduit on the outer side thereof.

In this known configuration the reinforcing layer is provided with axial engaging elements, while the inner wall of the coupling pipe is provided with axial connecting elements which correspond with and connect to the engaging elements.

Such a reinforcing layer achieves that the coupling pipe is mechanically stronger and thereby better able to withstand the diverse torsional, bending and tensile forces to which the coupling is exposed during use.

In the known configuration the reinforcing layer can be a separately releasable component or form an element integrated with the coupling pipe. The coupling with reinforcing layer - if formed integrally - is preferably manufactured by injection moulding of two components.

The coupling with integrated reinforcing layer described in WO 2012/030221 has the features that the production thereof is based on injection moulding with two components and on the arranging of interacting axial elements on the inner wall of the coupling pipe and on or in the reinforcing layer.

For the reinforcing layer, which is cylindrical and therefore has in fact the form of a second pipe inside the coupling pipe, a requirement is at the same time set that it makes a very good contact with the inner wall of the coupling pipe in order to be able to properly absorb torsional and bending forces.

When the reinforcing layer is embodied as a loose separate sleeve, the dimensioning of the sleeve is highly critical since it must be close-fittingly enclosed inside the coupling pipe. This is also the case for the axial elements of the sleeve, which must connect closely onto the opposite axial elements of the inner wall of the coupling pipe.

In addition, the known configuration has further drawbacks. Axial outer ends of the coupling pipe of the coupling have for instance a conical form and the reinforcing layer extends to a distance from outer ends of the coupling pipe. Particularly with such a conical form, but also generally with a cylindrical form, of outer ends of the coupling pipe it is possible - when outer surfaces of precisely these outer ends of the coupling pipe are heated or when the conduit for connecting thereto is placed over the outer ends of the coupling pipe - that the reinforcing layer at a distance from the outer ends of the coupling pipe cannot prevent the exits or outer ends without this reinforcing layer of the coupling pipe from bending inward during the polyfusion welding as a result of the heat released here. Where it has been arranged in the interior of the coupling pipe, the reinforcing layer does however generally prevent the coupling pipe deforming inward when the conduit for connecting is heated or placed thereover. Gap formation can hereby occur between an exit or outer end of the coupling pipe and the conduit for connecting, whereby a problem-free flow through the conduits at the position of the couplings cannot be guaranteed, or pressure losses can even occur.

The object of the present invention is to at least reduce, if not obviate the above stated and/or other problems and/or drawbacks of known configurations with a reinforcing layer for a coupling pipe.

According to a first aspect, the invention provides for this purpose a reinforcing sleeve in an assembly with a coupling according to the appended main claim relating to the assembly.

Such a reinforcing sleeve first of all simplifies the insertion and placing thereof in a coupling pipe, while a close-fitting contact can be guaranteed after placing. A reinforcing sleeve at or in an outer end of the coupling pipe moreover brings about form-retention thereof, even when the outer ends of the coupling pipe are heated or the conduit is placed thereover. It makes no difference here whether the reinforcing sleeve is arranged during production of the coupling or provided as separate module.

Owing to the presence of the slit with an intermediate space which is variable it becomes possible to reduce the size of the contour of the reinforcing sleeve by pressing it lightly together, so that placing takes place without much resistance. Following placing the contour will increase in size again as a result of the resilient property of the sleeve, whereby it connects closely to the inner wall of the coupling pipe. In addition, the reinforcing sleeve is to some extent compressible in the situation where it is assembled with the coupling pipe, for instance during heating of outer surfaces of coupling pipes with a weld bush and also during placing of the conduit for connecting over the coupling pipe. The reinforcing sleeve thus imparts an aligning effect relative to the weld bush and also the conduit for connecting, even when the material of the coupling pipe is in a plastic state for fusing thereof with the conduit for connecting.

The dimensions and the form of the reinforcing sleeve are chosen here such that the outer periphery of the reinforcing sleeve in unloaded state is equal to or a fraction larger than the dimensions of the inner wall.

The operation of insertion and placing can thus be performed easily and quickly by the skilled person prior to the polyfusion welding of the coupling to a conduit outer end.

Because of the outward directed clamping force of the reinforcing sleeve on the inner wall of the coupling pipe there is substantially no risk of the assembly of reinforcing sleeve and coupling pipe unintentionally detaching before the polyfusion welding.

When the polyfusion welding is then carried out, a second advantageous effect occurs associated with the reinforcing sleeve according to the invention.

The slit extending at least in axial direction of the sleeve will, after placing inside the coupling pipe, have an intermediate space lying in the range between the space in unloaded state and the space in compressed state. This intermediate space is filled during the polyfusion welding with material of the inner wall of the coupling pipe, this material becoming to some extent plastic in the heat which is released during the polyfusion welding. The plastic material will shape itself to the outer surface of the reinforcing sleeve, and thus protrude at the position of the slit.

When the connected coupling pipe and the conduit outer end have cooled following polyfusion welding, a solidified protrusion of inner wall material remains behind inside the slit of the reinforcing sleeve. Just as the slit, this protrusion will extend in at least axial direction, whereby owing to the polyfusion welding step an element is formed on the inner wall which locks into the slit in the reinforcing sleeve.

It is thus possible without further provisions on reinforcing sleeve and coupling pipe to achieve an axial interaction between the two which increases the mechanical strength.

According to an embodiment of the invention, an outer end of the coupling pipe is provided with an edge. This edge functions as stop and supports correct and durable placing of the reinforcing sleeve inside the coupling pipe.

When the reinforcing sleeve has a conical contour, it is then recommended that the edge is present on the widening outer end of the reinforcing sleeve.

According to a further embodiment of the invention, a flange or the like on or of the reinforcing sleeve which in assembled state comes to lie against the edge is further provided with overhanging toothings. The overhanging toothings function as an additional fixation means or engagement when the edge of or flange on the reinforcing sleeve connects precisely to an outer end of a coupling pipe. It is hereby possible to arrange the reinforcing sleeve on, in or at a coupling such that the reinforcing sleeve remains thereon as a result of the engagement or fixation, and a polyfusion welding operation can be initiated without the danger of the sleeve detaching from the coupling.

In a further embodiment an assembly according to the present invention can have the features that at least one of the overhanging toothings comprises a hook-like member oriented into the coupling pipe in a situation assembled with the coupling. A mechanical coupling between the reinforcing sleeve and the coupling pipe can hereby be realized and it is possible to prevent a reinforcing sleeve being pulled out of a coupling pipe by a weld bush once this latter has heated the outer surface of a coupling pipe, as preparation for placing the conduit for connecting thereover, and is retracted. It can be favourable here for the coupling pipe of the coupling to comprise at least one recess for accommodating the hook-like member therein. Such a recess will be arranged in the outer surface of the coupling pipe in order to achieve the intended functionality.

In a preferred embodiment it can be advantageous for the coupling pipe to comprise in the interior thereof an edge against which the reinforcing sleeve, in the situation where it is assembled with the coupling, supports in the coupling pipe. The sleeve thus supports in the interior of the coupling pipe in order to define a reinforcement area where the sleeve has the intended functionality.

In a preferred embodiment it can be advantageous for the reinforcing sleeve and the coupling to be assembled during production of the coupling. Alternatively, the reinforcing sleeve and the coupling can be separate modules which can be assembled during (or immediately prior to) connection to a conduit.

The reinforcing sleeve according to the invention is preferably formed from a layer of material comprising a reinforced plastic such as PVDF, POM, PPSU or a similar material. Even a metal is possible.

This material must on the one hand be suitable for functioning as reinforcement, so that the mechanical strength of the coupling pipe as a whole is increased; this material must on the other have sufficient resilience and be sufficiently flexible to be suitable for the invention.

In a first preferred embodiment the reinforcing sleeve according to the invention has a contour which is conical. The reinforcing sleeve is thus suitable for placing inside a coupling pipe with an inner wall having a conical form.

In a second preferred embodiment the reinforcing sleeve according to the invention has a contour which is cylindrical. The reinforcing sleeve is thus suitable for placing inside a coupling pipe with an inner wall having a cylindrical form.

In a third preferred embodiment the reinforcing sleeve according to the invention has a contour comprising a conical and a cylindrical portion. The reinforcing sleeve is thus suitable for placing inside a coupling pipe with an inner wall having both a conical and a cylindrical form.

In the reinforcing sleeve according to the invention the outer surface is more preferably provided with a relief structure, preferably one or more recessed portions. This ultimately increases the surface area with which the inner wall of the coupling pipe can engage on the reinforcing sleeve.

As already elucidated above in respect of the slit in the reinforcing sleeve, the inner wall of the coupling pipe will deform plastically during the polyfusion welding such that the inner wall shapes itself to the adjacent outer surface of the reinforcing sleeve. When the outer surface is provided with a relief structure, a structure will have been formed - after cooling - on the inner wall which engages on the relief structure of the reinforcing sleeve. An additional engaging element is thus formed in addition to the protrusion of the inner wall inside the intermediate space of the slit in the reinforcing sleeve.

Together with the above stated advantages of the reinforcing sleeve, a coupling provided with the reinforcing sleeve according to the first aspect of the invention has the following advantages:
- it is easy to assemble from a coupling and reinforcing sleeve and so highly suitable for use in practice;
- after polyfusion welding to a conduit outer end the coupling provides sufficient points of engagement between coupling and reinforcing sleeve for the purpose of absorbing torsional and bending forces, whereby a robust coupling is obtained;
- the coupling is highly suitable per se for durable coupling of multilayer conduits without the integrity of the conduits being lost. A very high quality welded connection is in particular obtained because the conduit outer end is completely enveloped due to being placed in the annular insertion space of the coupling.

In the assembly according to the invention the contour of the reinforcing sleeve is preferably conical or comprises a conical and a cylindrical portion, while the inner diameter of the coupling pipe increases at the outer end in outward direction.

Such a combination ensures an optimal close fit of the outer surface of the reinforcing sleeve on the inner wall of the coupling pipe.

In a preferred embodiment of the assembly according to the invention the coupling is formed substantially from material comprising PE, reinforced PE or PE-RT.

Such materials are the most usual for multilayer conduits, so that the coupling and the multilayer conduit thus have the same properties. This is advantageous not only for the application but also during coupling, since the welding device can be set to one specific temperature to plasticize the respective contact surfaces of the conduit and the coupling.

It is further recommended in the assembly according to the invention that the annular space of the coupling narrows in the direction of the wall such that the radial distance between the widened portion of the wall and the outer side of the coupling pipe decreases to a value smaller than the wall thickness of the conduit.

Such a design of the coupling makes it possible for the outer end of the pipe to be properly clamped in the annular space of the coupling and for an optimal fused connection to be obtained. Even more important is the additional effect that the fused connection or weld rib formed during the coupling by polyfusion welding is deformed in particular manner by the narrowing space. As a result of the narrowing space the weld rib formed between outer wall and widened portion is urged outward to some extent, whereby a protruding weld rib is obtained. The great advantage hereof is that on the basis of the protruding weld rib it is easy for a user to determine visually whether the obtained welded connection is of sufficient quality. It is thus possible in practice to carry out an immediate visual check on the obtained connection, this saving time.

In the assembly according to the invention the upright wall of the coupling more preferably has a widened portion of a length which is smaller in axial direction than the axial length of the coupling pipe as measured from the upright wall to the outer end of the coupling pipe, and preferably smaller by a factor of 4 or more.

The widened portion of the coupling pipe makes contact with the outer wall of the conduit, while the inner wall of the conduit makes contact with the outer side of the coupling pipe itself. Since the outer wall of a multilayer conduit is relatively vulnerable, it is recommended that the contact surface is relatively small here and the contact surface on the inner side of the conduit is relatively large. An optimal strength of the connection is thus obtained, while the outer wall of the conduit is exposed as little as possible to shear forces, whereby the protection of the metal layer by the outer wall remains intact.

According to a third aspect, the invention relates to a method for welding an outer end of a multilayer conduit to an assembly according to the second aspect of the invention,
wherein the method comprises the steps of:
inserting and placing the reinforcing sleeve in the corresponding inner space of the coupling pipe of the coupling in a manner such that the contour of the reinforcing sleeve connects substantially closely to an inner wall of the coupling pipe with the toothings in a position engaging the outer end of the coupling pipe,
heating the outer end of the conduit,
placing the outer end of the conduit in the insertion space of the coupling over the coupling pipe and over the toothings of the reinforcing sleeve in order to fuse the outer end with the coupling, and subsequently allowing cooling of the obtained fused connection,
wherein during performing of the method the inner wall of the coupling pipe deforms plastically due to the applied heat such that the inner wall shapes itself to the adjacent outer surface of the reinforcing sleeve, whereby after cooling there is created on the inner wall a structure which engages on the outer surface of the reinforcing sleeve.

In the context of the step or feature of heating the outer end of the conduit it is noted that the outer end of the relevant conduit can be heated directly here, but not also via the coupling. Diverse mandrels are available in the known art, wherein adapters can be applied for placing on a heating element. It is noted that, irrespective of the method of heating, it is important that a sufficient temperature is generated in the material of the coupling and/or the material of the conduit in order to bring about fusing of the conduit and the coupling.

Such a method makes it possible to obtain a durable weld between a conduit outer end and a coupling, wherein:
- after polyfusion welding to a conduit outer end the coupling provides sufficient points of engagement between coupling and reinforcing sleeve for the purpose of absorbing torsional and bending forces so as to obtain a robust coupling;
- a very high quality of welded connection is obtained in that the conduit outer end is fully enveloped by the coupling following placing in the annular insertion space;
- a simple visual check on the quality of the weld is possible when the insertion space takes a narrowing form.

The invention is elucidated hereinbelow with reference to the accompanying drawings, in which:
Figure 1 is a perspective view of a reinforcing sleeve according to the invention;
Figure 2 shows a cross-section of the coupling of Figure 1;
Figure 3 shows a cross-section of an assembly according to the invention of a coupling with a reinforcing sleeve arranged therein;
Figure 4 is a perspective view of an alternative embodiment of a reinforcing sleeve according to the invention;
Figure 5 is a side view of a subsequent alternative embodiment of a reinforcing sleeve according to the invention;
Figures 6A and 6B show side views of two different embodiments of a reinforcing sleeve according to the invention;
Figures 7A and 7B show perspective views of a subsequent alternative embodiment of a reinforcing sleeve according to the invention;
Figures 8A and 8B show a combination of a multilayer pipe or conduit, and coupling and a sleeve, in a properly aligned positioning and in a too hastily assembled state which displays misalignment; and

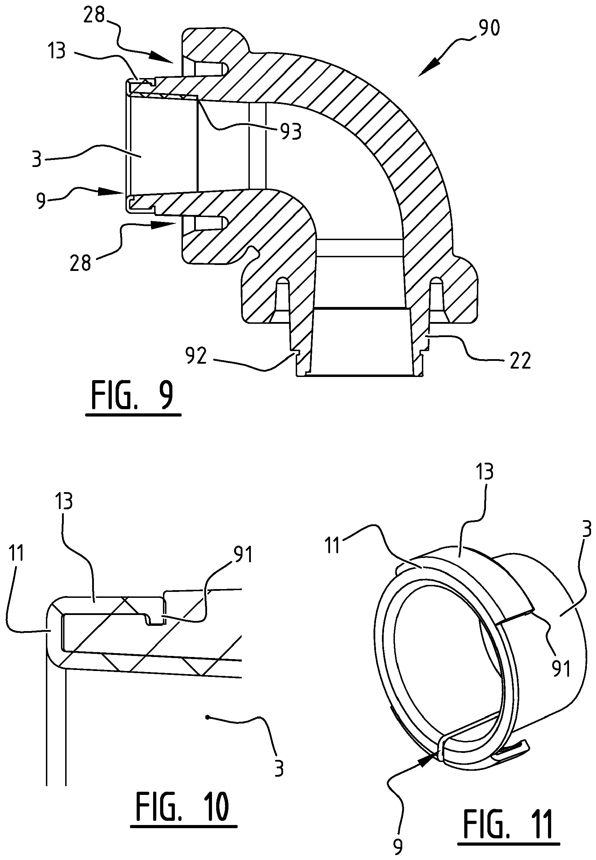

Figures 9, 10 and 11 show respectively a cross-sectional side view, a detail and a perspective view of an assembly and elements or components thereof according to the invention in a further additional embodiment.

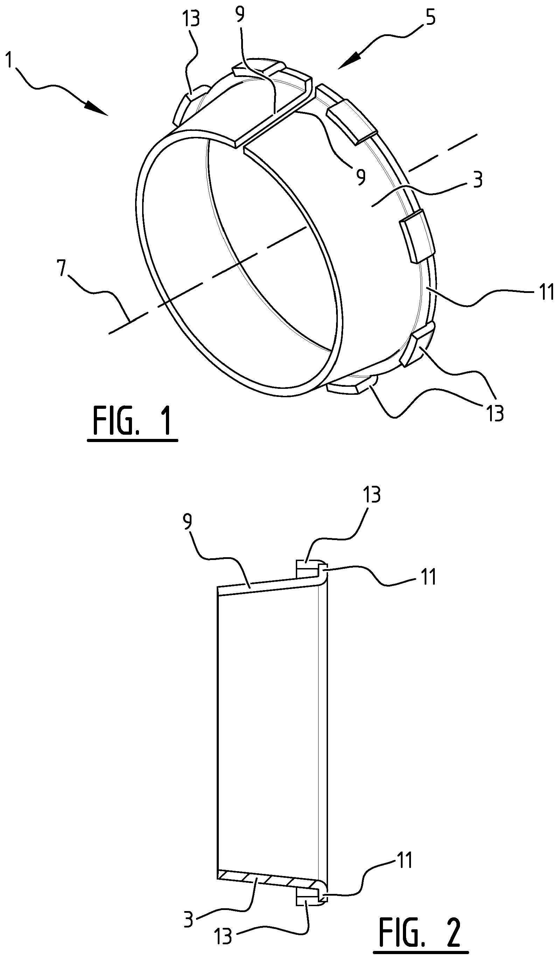

Figure 1 shows a reinforcing sleeve 1 formed from a curved layer 3 which is provided with a slit 5 extending parallel to the axial axis 7, wherein the intermediate space of slit 5 is enclosed by slit edges 9. The form of the sleeve is slightly conical, wherein an edge 11 is present over the whole periphery on the widening end, this edge moreover being provided with overhanging toothings 13.

The reinforcing sleeve according to the invention can be formed from a layer of material comprising a reinforced plastic, such as PVDF, POM, PPSU or a similar material. Even a metal is possible.

Figure 2 shows a cross-section of the coupling of Figure 1 in which the corresponding components are indicated with the same numbering. The cross-section is made in the plane of the axial axis 7 and the diameter of the sleeve at the position of slit 5.

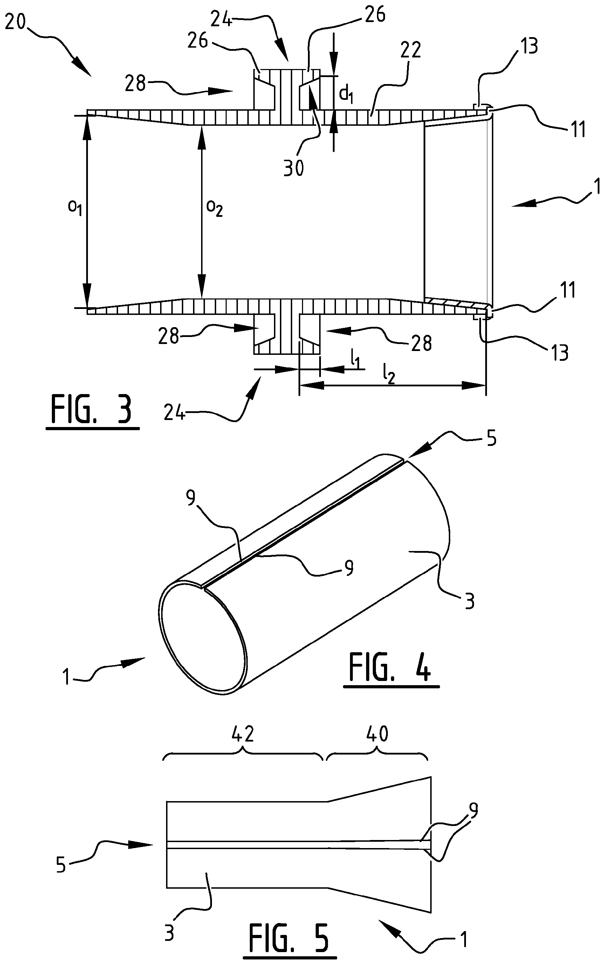

Figure 3 shows a cross-section in lengthwise direction of a coupling 20 provided according to the invention with a reinforcing sleeve 1.

The coupling is constructed from a coupling pipe 22 of substantially cylindrical form with an inner diameter o₂.

At the outer ends of coupling pipe 22 the inner diameter widens to a value o₁. The outer ends of the coupling pipe thus have a conical form. At the position of this conically running inner wall of the coupling pipe the reinforcing sleeve 1 is arranged with a correspondingly conical form. In this embodiment edge 11 covers the outer end of the coupling pipe and the overhanging toothings 13 clamp the sleeve fixedly to the outer end of the coupling pipe.

The coupling also comprises an upright wall 24 having a widened portion 26 on either side, whereby an annular insertion space 28 is created. This insertion space 28 narrows in the direction of the upright wall because of the form of the contact wall 30. At the position of the access to insertion space 28 the radial distance (d₁) between the widened portion of the wall and the outer side of the coupling pipe is equal to or greater than the wall thickness of a conduit outer end coupled by polyfusion welding to the coupling.

Widened portion 26 has a length l₁ which is about 10 times smaller than the length l₂ of the coupling pipe as measured from the upright wall to the outer end of the coupling pipe.

Figure 4 shows an embodiment of a reinforcing sleeve 1 constructed from a tubular layer 3, the contour of which is cylindrical and provided with a slit 5 along the whole length which is enclosed by slit edges 9.

Figure 5 shows an embodiment of a reinforcing sleeve 1 constructed from a tubular layer 3, the contour of which comprises a conical portion 40 and a cylindrical portion 42. The reinforcing sleeve is provided with a slit 5 along the whole length which is enclosed by slit edges 9.

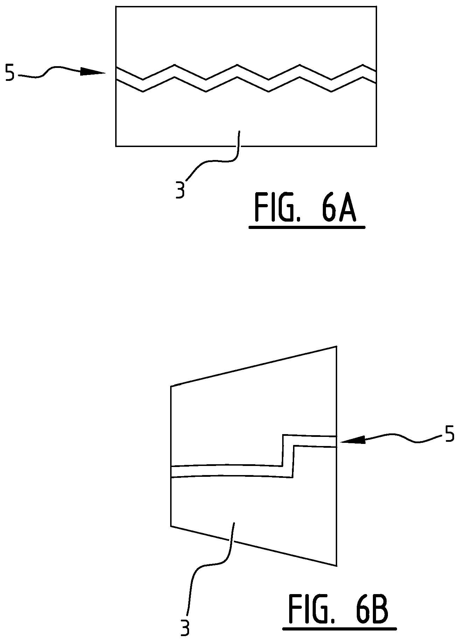

Figure 6A shows a variant of the embodiment according to Figure 4, wherein slit 5 is embodied as a line with a zigzag form.

Figure 6B shows a reinforcing sleeve with conical contour, wherein slit 5 takes a bent form.

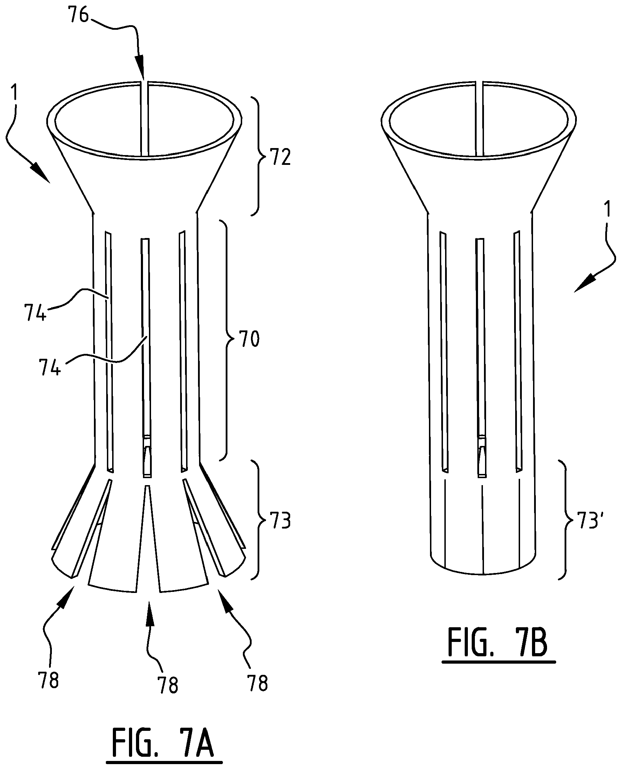

Figure 7A shows a reinforcing sleeve with a diabolo-like form, the two outer ends 72,73 of which are conically widening and the central portion 70 has a cylindrical contour. The central portion is provided with axial slots 74. The upper outer end 72 is provided with an axial slit 76. The lower outer end 73 is provided with eight slits 78 arranged at equal distances from each other.

Slits 78 can be squeezed together by a user to form a tube as shown in Figure 7B. The squeezed-together entity designated 73' can then be inserted into a coupling pipe of a type as shown in Figure 3.

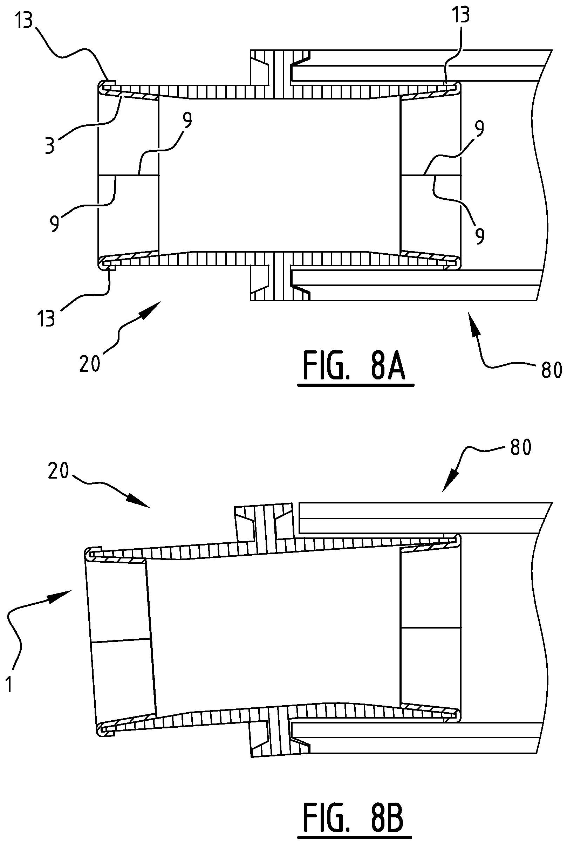

Figures 8A and 8B show two mounted states, wherein Figure 8A is correctly aligned and Figure 8B has been assembled too hastily and displays a misalignment of coupling 20 relative to a multilayer pipe or conduit 80. Sleeve 1 does not form any obstruction during deforming or bending of parts of coupling 20, and precisely such a deforming or bending is necessary, if not desirable, in order to realize a good seal between coupling 20 and pipe 80 when coupling 20 is placed in an angled orientation on, in or against the pipe during assembly thereof as shown in Figure 8B. Once materials of coupling 20 and pipe 80 have fused, a correction of such a misalignment is no longer possible. Due to the heating of the material of coupling 20 and/or pipe 80 and/or the tapering form of the outer ends of the parts of coupling 20 which have to be inserted into pipe 80 during assembly, the outer ends of coupling 20 are in any event flexible so as to bring about the inclining position shown in Figure 8B and to simultaneously also achieve a good seal between coupling 20 and pipe 80.

It is further noted in this context that in Figures 8A and 8B the slit edges 9 connect closely to each other. Melted material from coupling 20 can hardly penetrate the slit between slit edges 9, or can only do so to limited extent. When some measure of space remains between slit edges 9, cured material from coupling 20 can form a locking against radial rotation of sleeve 1. The penetration of melted material from coupling 20 into the slit between edges 9 will almost always occur to some extent. The reinforcing sleeve keeps the outer end of the coupling pipe round, and when the conduit for welding is pushed over the outer end of the coupling pipe over the toothings 13, the additional effect is achieved that, even due to this sliding movement, the reinforcing sleeve is fixed properly and additionally on the sole basis of a clamping action of the toothings.

When the coupling pipe with support sleeve is inserted into the welding device (weld bush or welding mandrel), the coupling pipe is compressed, i.e. pressed inward, since both the outer ends of the coupling pipe and the welding mandrel are conical. This compression can be accommodated because the reinforcing sleeve is provided with slit 9 and can thereby also bend inward; it thus temporarily acquires a smaller diameter during heating, but presses outward in order to enhance contact between material of outer ends of the coupling pipe and the weld bush.

When outer ends of the coupling pipe are pulled outward out of the weld bush the reinforcing sleeve can remain behind in the weld bush. Toothings 13 of the reinforcing sleeve provide a first solution to this. In a further improvement hook members 91 can be arranged on toothings 13. These can be pressed into plasticized material of outer ends of the coupling pipe, or the coupling pipe can comprise a groove 92 or other accommodation for receiving these hook members 91, wherein hook members 91 can hook into groove 92. Particularly when grooves 92 are wider in radial direction than the hook members, a clearance is provided for compression of the outer ends of the coupling pipe and of the reinforcing sleeve, wherein hook members 91 can slide in grooves 92.

This toothing 13 and hook members can be augmented with a horizontal/angled variant, whereby during welding (heating) and following connection the sleeve is and remains axially and radially anchored.

Different aspects can be distinguished here: if the sleeve is inserted DURING production of the fitting, sufficient grip for the reinforcing sleeve is provided as a result of an injection moulding process. The sleeve does not bend and lies firmly in the direction of the interior of the conduit if there is misalignment between the conduit and the coupling pipe and welding takes place in this position. The sleeve nevertheless retains the shape of outer ends of the coupling pipe during heating and welding and a reliable and properly sealed connection can nevertheless be effected.

If the sleeve is provided in modular form and the sleeve is inserted into the coupling pipe at a later time than during production of the coupling pipe, the sleeve temporarily lies "loosely" in an outer end of the coupling pipe of the coupling. Due to the slit 9 the sleeve can be compressed during heating with the weld bush and/or during the connection of the conduit for connecting and during bending toward the pipe wall when welded at an angle. As indicated above, a temporary anchoring is necessary in such a situation to prevent the sleeve remaining behind in the welding mandrel following heating of at least one outer end of the coupling pipe. From a technical viewpoint the sleeve thus has three anchors: 1. radial anchoring around the outer side of the fitting to absorb the axial force when the coupling pipe of the coupling is pulled out of a weld bush, so that the sleeve does not remain behind; 2. axial anchoring on top of the sleeve in order to obtain a connection between the coupling and the conduit after welding; and 3. the slit provides for the compression option and an anchoring against rotation during welding.

The sleeve lies against a shoulder or edge 93 in order to prevent the sleeve being pressed into the coupling pipe.

After examination of the foregoing disclosure of the present invention many alternative and additional embodiments will occur to the skilled person which all lie within the scope of protection therefor in accordance with the appended claims. It is noted here particularly, though not exclusively, that the slit in the reinforcing sleeve can remain wholly closed in the situation where it is inserted into the coupling and need not form an accommodation for receiving melted material of the coupling in order to form a locking with which radial rotation of the reinforcing sleeve can be prevented. It is additionally possible that dimensions of a slit between slit edges can be varied, for instance by providing break-out pieces, whereby material can be removed from the reinforcing sleeve and the dimensions of the sleeve made adjustable for a user, without overlap of slit edges in a situation where the sleeve is inserted in the coupling. All individually presented features, components and elements can be combined in embodiments not specifically shown or described. A zigzag shaped slit of Figure 6A or 6B can thus be provided in a cylindrical sleeve such as that of Figure 5.

## Claims

1. Kit of parts, comprising a reinforcing sleeve (1) and a coupling (20) configured to be connected to a multilayered conduit
- wherein the coupling (20) comprises a coupling pipe (22), which coupling pipe is provided on the outer side with a radially upright wall (24), which wall is widened (26) in axial direction at a radial distance from the outer side of the coupling pipe such that the outer side of the coupling pipe (22), the upright wall (24) and the widened portion (26) enclose an annular insertion space (28) into which an outer end of a conduit or of a welding device can be directly inserted, and wherein the radial distance (d₁) between the widened portion of the wall and the outer side of the coupling pipe (22) at the position of the entry to the insertion space is such that it is equal to or greater than the wall thickness of the conduit or the thickness of the welding device; and
- wherein the reinforcing sleeve (1) is substantially tubular and designed for placing inside the coupling pipe (22), **characterized in that** the reinforcing sleeve (1):
- extends inward into the coupling pipe (22) from the axial outer end of the coupling pipe (22) of the coupling (20), and comprises:
- a slit (5) extending at least in axial direction (7) of the reinforcing sleeve, and wherein the slit (5) is enclosed by slit edges (9) of the reinforcing sleeve, which slit edges define an intermediate space, the intermediate space being variable **in that** the reinforcing sleeve (1) takes a flexible and resilient form, wherein the dimensions and the form of the reinforcing sleeve are such that the contour of the reinforcing sleeve can be arranged inside the coupling pipe (22) and there connects closely to an inner wall of the coupling pipe.

2. Kit of parts as claimed in claim 1, wherein the reinforcing sleeve comprises an outer end with an edge (11), wherein in a situation where the reinforcing sleeve is assembled with the coupling the edge (11) lies at or against an axial outer end of the coupling pipe (22) and comprises toothings (13) hanging over the axial outer end of the coupling pipe, which overhanging toothings (13), in a situation assembled with the coupling (20) wherein the edge (11) of the reinforcing sleeve connects to the outer end of the coupling pipe (22), form a locking or fixation for the purpose of arranging the reinforcing sleeve in the coupling pipe (22) in order to prevent, as addition to the resilient flexibility, the reinforcing sleeve detaching from the coupling.

3. Kit of parts as claimed in claim 2, wherein at least one of the overhanging toothings (13) comprises a hook-like member (91) oriented into the coupling pipe in a situation assembled with the coupling.

4. Kit of parts as claimed in claim 3, wherein the coupling pipe (22) of the coupling (20) comprises at least one recess (92) for accommodating the hook-like member (91) therein.

5. Kit of parts as claimed in at least one of the foregoing claims, wherein the coupling pipe (22) comprises in the interior thereof an edge (93) against which the reinforcing sleeve (1), in the situation assembled with the coupling, supports in the coupling pipe.

6. Kit of parts as claimed in at least one of the foregoing claims, wherein the reinforcing sleeve (1) and the coupling are assembled during production of the coupling.

7. Kit of parts as claimed in at least one of the foregoing claims, wherein the reinforcing sleeve (1) and the coupling are separate modules which can be assembled during connection to a conduit.

8. Kit of parts as claimed in at least one of the foregoing claims, wherein the contour of the reinforcing sleeve (1) is conical or comprises a conical (40) and a cylindrical (42) portion, while the inner diameter (o₂) of the coupling pipe (20) increases at the outer end in outward direction.

9. Kit of parts as claimed in at least one of the foregoing claims, wherein the reinforcing sleeve is formed from a layer of material (3) comprising a reinforced plastic such as PVDF, POM, PPSU or a similar material, or a metal.

10. Kit of parts as claimed in at least one of the foregoing claims, the contour of which comprises a conical (40) and a cylindrical portion (42).

11. Kit of parts as claimed in at least one of the foregoing claims, wherein at least the reinforcing sleeve has the form of a diabolo (72, 70, 73).

12. Kit of parts as claimed in at least one of the foregoing claims, wherein an outer surface of the reinforcing sleeve is provided with a relief structure, preferably of one or more recessed portions.

13. Kit of parts as claimed in at least one of the preceding claims, wherein the reinforcing sleeve has an at least partially conical contour.

14. Kit of parts as claimed in at least one of the foregoing claims, wherein the reinforcing sleeve comprises a continuous slit extending in axial direction through the sleeve.

15. Method for welding an outer end of a conduit to a kit of parts as claimed in any of the foregoing claims, wherein the method comprises the steps of:
inserting and placing the reinforcing sleeve (1) in the corresponding inner space of the coupling pipe (22) of the coupling (20) in a manner such that the contour of the reinforcing sleeve connects substantially closely to an inner wall of the coupling pipe,
heating the outer end of the conduit and/or heating the coupling pipe of the coupling using a heating device, such as a welding mandrel, to be arranged in the conduit and/or over an outer end of the coupling pipe,
placing the outer end of the conduit in the insertion space of the coupling over the coupling pipe (22) in order to fuse the outer end of the conduit to the coupling pipe of the coupling, and subsequently allowing cooling of the obtained fused connection,
wherein during at least one of the heating and the insertion the inner wall of the coupling pipe (22) deforms plastically due to the applied heat and/or mechanical pressure, and
hereby deforming and more particularly compressing the reinforcing sleeve, and holding an outer end of the coupling pipe, and in particular a conically shaped outer end of the coupling pipe, aligned with the reinforcing sleeve during the at least one of the heating and the insertion.

## Patentansprüche

1. Teilesatz, der eine Verstärkungsbuchse (1) und eine Kupplung (20) umfasst, die dafür eingerichtet sind, mit einer mehrschichtigen Leitung verbunden zu werden,
- wobei die Kupplung (20) eine Kupplungsröhre (22) umfasst, wobei die Kupplungsröhre auf der Außenseite mit einer radial stehenden Wand (24) ausgestattet ist, wobei die Wand in einem radialen Abstand von der Außenseite der Kupplungsröhre in axialer Richtung aufgeweitet (26) ist, derart, dass die Außenseite der Kupplungsröhre (22), die stehende Wand (24) und der aufgeweitete Abschnitt (26) einen ringförmigen Einführungsraum (28) umgeben, in den ein äußeres Ende einer Leitung oder einer Schweißvorrichtung direkt eingeführt werden kann, und wobei der radiale Abstand (d₁) zwischen dem aufgeweiteten Abschnitt der Wand und der Außenseite der Kupplungsröhre (22) an der Stelle des Eintritts in den Einführungsraum derart ist, dass er gleich der oder größer als die Wanddicke der Leitung oder die Dicke der Schweißvorrichtung ist; und
- wobei die Verstärkungsbuchse (1) im Wesentlichen röhrenförmig und dafür eingerichtet ist, innerhalb der Kupplungsröhre (22) angeordnet zu werden,
**dadurch gekennzeichnet, dass** die Verstärkungsbuchse (1) sich:
- nach innen in die Kupplungsröhre (22) hinein erstreckt, vom axial äußeren Ende der Kupplungsröhre (22) der Kupplung (20) her, und Folgendes umfasst:
- einen Schlitz (5), der sich wenigstens in axialer Richtung (7) der Verstärkungsbuchse erstreckt, und wobei der Schlitz (5) von Schlitzkanten (9) der Verstärkungsbuchse eingefasst wird, wobei die Schlitzkanten einen dazwischenliegenden Spalt definieren und der dazwischenliegende Spalt derart veränderlich ist, dass die Verstärkungsbuchse (1) eine anpassungsfähige und elastische Form aufweist, wobei die Abmessungen und die Form der Verstärkungsbuchse derart sind, dass der Umriss der Verstärkungsbuchse innerhalb der Kupplungsröhre (22) angeordnet werden kann und dort eng mit einer Innenwand der Kupplungsröhre verbunden ist.

2. Teilesatz nach Anspruch 1, wobei die Verstärkungsbuchse ein äußeres Ende mit einer Kante (11) umfasst und wobei in einem Zustand, in dem die Verstärkungsbuchse mit der Kupplung zusammengebaut ist, die Kante (11) an einem axial äußeren Ende der Kupplungsröhre (22) liegt oder anliegt und Zähne (13) umfasst, die am axial äußeren Ende der Kupplungsröhre hervorstehen, wobei die hervorstehenden Zähne (13), in einem mit der Kupplung (20) zusammengebauten Zustand, in der die Kante (11) der Verstärkungsbuchse mit dem äußeren Ende der Kupplungsröhre (22) verbunden ist, eine Verriegelung oder Fixierung bilden, mit dem Zweck die Verstärkungsbuchse in der Kupplungsröhre (22) anzuordnen, um hierdurch, zusätzlich zur elastischen Anpassungsfähigkeit, zu verhindern, dass die Verstärkungsbuchse sich von der Kupplung löst.

3. Teilesatz nach Anspruch 2, wobei wenigstens einer der hervorstehenden Zähne (13) ein hakenartiges Element (91) umfasst, das, in einem mit der Kupplung zusammengebauten Zustand, in die Kupplungsröhre hinein ausgerichtet ist.

4. Teilesatz nach Anspruch 3, wobei die Kupplungsröhre (22) der Kupplung (20) wenigstens eine Aussparung (92) umfasst, um das hakenartige Element (91) darin aufzunehmen.

5. Teilesatz nach wenigstens einem der vorhergehenden Ansprüche, wobei die Kupplungsröhre (22) in ihrem Inneren eine Kante (93) umfasst, gegen die, in dem mit der Kupplung zusammengebauten Zustand, die Verstärkungsbuchse (1) in der Kupplungsröhre gehalten wird.

6. Teilesatz nach wenigstens einem der vorhergehenden Ansprüche, wobei die Verstärkungsbuchse (1) und die Kupplung während der Herstellung der Kupplung zusammengebaut werden.

7. Teilesatz nach wenigstens einem der vorhergehenden Ansprüche, wobei die Verstärkungsbuchse (1) und die Kupplung getrennte Module sind, die bei der Verbindung mit einer Leitung zusammengebaut werden.

8. Teilesatz nach wenigstens einem der vorhergehenden Ansprüche, wobei der Umriss der Verstärkungsbuchse (1) konisch ist oder einen konischen (40) und einen zylindrischen (42) Abschnitt umfasst, wobei der Innendurchmesser (o₂) der Kupplungsröhre (20) am äußeren Ende nach außen gerichtet zunimmt.

9. Teilesatz nach wenigstens einem der vorhergehenden Ansprüche, wobei die Verstärkungsbuchse aus einer Schicht aus einem Material (3) gebildet ist, das ein verstärktes Kunststoffmaterial umfasst, wie etwa PVDF, POM, PPSU oder ein vergleichbares Material, oder ein Metall.

10. Teilesatz nach wenigstens einem der vorhergehenden Ansprüche, wobei dessen Umriss einen konischen (40) und einen zylindrischen (42) Abschnitt umfasst.

11. Teilesatz nach wenigstens einem der vorhergehenden Ansprüche, wobei wenigstens die Verstärkungsbuchse die Form eines Diabolos (72, 70, 73) hat.

12. Teilesatz nach wenigstens einem der vorhergehenden Ansprüche, wobei eine Außenfläche der Verstärkungsbuchse mit einer Reliefstruktur ausgestattet ist, vorzugsweise mit einem oder mehreren vertieften Abschnitten.

13. Teilesatz nach wenigstens einem der vorhergehenden Ansprüche, wobei die Verstärkungsbuchse einen wenigstens teilweise konischen Umriss hat.

14. Teilesatz nach wenigstens einem der vorhergehenden Ansprüche, wobei die Verstärkungsbuchse einen durchgehenden Schlitz umfasst, der sich in axialer Richtung durch die Buchse erstreckt.

15. Verfahren zum Verschweißen eines äußeren Endes einer Leitung mit einem Teilesatz nach einem der vorhergehenden Ansprüche, wobei das Verfahren die folgenden Schritte umfasst:
Einführen und Platzieren der Verstärkungsbuchse (1) in den zugehörigen Innenraum der Kupplungsröhre (22) der Kupplung (20) derart, dass der Umriss der Verstärkungsbuchse im Wesentlichen eng mit einer Innenwand der Kupplungsröhre verbunden ist,
Erhitzen des äußeren Endes der Leitung und/oder Erhitzen der Kupplungsröhre der Kupplung unter Verwendung einer Vorrichtung zum Erhitzen, wie etwa einem Schweißdorn, der dafür vorgesehen ist, in der Leitung und/oder über einem äußeren Ende der Kupplungsröhre angeordnet zu werden,
Platzieren des äußeren Endes der Leitung im Einführungsraum der Kupplung über der Kupplungsröhre (22), um das äußere Ende der Leitung mit der Kupplungsröhre der Kupplung zu verschweißen, und anschließend das Zulassen der Abkühlung der erhaltenen verschweißten Verbindung,
wobei während wenigstens einem von dem Erhitzungsschritt und dem Einführungsschritt die Innenwand der Kupplungsröhre (22) sich aufgrund der angewendeten Hitze und/oder mechanischen Drucks plastisch deformiert, und
hierdurch das Verformen und insbesondere das Zusammendrücken der Verstärkungsbuchse, und das Halten eines äußeren Endes der Kupplungsröhre und insbesondere eines konisch geformten äußeren Endes der Kupplungsröhre, das während dem wenigstens einen von dem Erhitzungsschritt und dem Einführungsschritt mit der Verstärkungsbuchse ausgerichtet ist.

## Revendications

1. Kit de pièces comprenant un manchon de renfort (1) et un accouplement (20) configuré pour être raccordé à un conduit multicouche,
- dans lequel l'accouplement (20) comprend un tuyau d'accouplement (22), lequel tuyau d'accouplement est prévu sur le côté extérieur d'une paroi radialement verticale (24), laquelle paroi est élargie (26) dans une direction axiale à une distance radiale du côté extérieur du tuyau d'accouplement de sorte que le côté extérieur du tuyau d'accouplement (22), la paroi verticale (24) et la portion élargie (26) enferment un espace d'insertion annulaire (28) dans lequel une extrémité extérieure d'un conduit ou d'un dispositif de soudage peut être directement insérée, et dans lequel la distance radiale (d₁) entre la portion élargie de la paroi et le côté extérieur du tuyau d'accouplement (22) dans la position de l'entrée à l'espace d'insertion est telle qu'elle est égale ou supérieure à l'épaisseur de paroi du conduit ou l'épaisseur du dispositif de soudage ; et
- dans lequel le manchon de renfort (1) est sensiblement tubulaire et conçu pour le placement à l'intérieur du tuyau d'accouplement (22), **caractérisé en ce que** le manchon de renfort (1) :
- s'étend vers l'intérieur dans le tuyau d'accouplement (22) depuis l'extrémité extérieure axiale du tuyau d'accouplement (22) de l'accouplement (20), et comprend :
- une fente (5) s'étendant au moins dans la direction axiale (7) du manchon de renfort, et dans lequel la fente (5) est enfermée par des arêtes de fente (9) du manchon de renfort, lesquelles arêtes de fente définissent un espace intermédiaire, l'espace intermédiaire étant variable **en ce que** le manchon de renfort (1) prend une forme flexible et élastique, dans lequel les dimensions et la forme du manchon de renfort sont telles que le contour du manchon de renfort puisse être agencé à l'intérieur du tuyau d'accouplement (22) et se raccorde étroitement à une paroi intérieure du tuyau d'accouplement.

2. Kit de pièces selon la revendication 1, dans lequel le manchon de renfort comprend une extrémité extérieure avec une arête (11), dans lequel dans une situation où le manchon de renfort est assemblé avec l'accouplement, l'arête (11) se trouve au niveau ou contre une extrémité extérieure axiale du tuyau d'accouplement (22) et comprend des dentures (13) en surplomb de l'extrémité extérieure axiale du tuyau d'accouplement, lesquelles dentures en surplomb (13), dans une situation assemblée avec l'accouplement (20), dans lequel l'arête (11) du manchon de renfort se raccorde à l'extrémité extérieure du tuyau d'accouplement (22), forment un verrouillage ou une fixation afin d'agencer le manchon de renfort dans le tuyau d'accouplement (22) en vue d'empêcher, outre la flexibilité élastique, le manchon de renfort de se détacher de l'accouplement.

3. Kit de pièces selon la revendication 2, dans lequel au moins une des dentures en surplomb (13) comprend un élément de type crochet (91) orienté dans le tuyau d'accouplement dans une situation assemblée avec l'accouplement.

4. Kit de pièces selon la revendication 3, dans lequel le tuyau d'accouplement (22) de l'accouplement (20) comprend au moins un évidement (92) pour loger l'élément de type crochet (91) dans celui-ci.

5. Kit de pièces selon au moins une des revendications précédentes, dans lequel le tuyau d'accouplement (22) comprend à l'intérieur de celui-ci une arête (93) contre laquelle le manchon de renfort (1), dans la situation assemblée avec l'accouplement, est en support dans le tuyau d'accouplement.

6. Kit de pièces selon au moins une des revendications précédentes, dans lequel le manchon de renfort (1) et l'accouplement sont assemblés pendant la production de l'accouplement.

7. Kit de pièces selon au moins une des revendications précédentes, dans lequel le manchon de renfort (1) et l'accouplement sont des modules séparés qui peuvent être assemblés pendant le raccordement à un conduit.

8. Kit de pièces selon au moins une des revendications précédentes, dans lequel le contour du manchon de renfort (1) est conique ou comprend une portion conique (40) et une portion cylindrique (42) alors que le diamètre intérieur (o₂) du tuyau d'accouplement (20) augmente à l'extrémité extérieure dans la direction vers l'extérieur.

9. Kit de pièces selon au moins une des revendications précédentes, dans lequel le manchon de renfort est formé d'une couche de matériau (3) comprenant une matière plastique renforcée telle que PVDF, POM, PPSU ou un matériau similaire, ou un métal.

10. Kit de pièces selon au moins une des revendications précédentes, dont le contour comprend une portion conique (40) et une portion cylindrique (42).

11. Kit de pièces selon au moins une des revendications précédentes, dans lequel au moins le manchon de renfort présente la forme d'un diabolo (72, 70, 73).

12. Kit de pièces selon au moins une des revendications précédentes, dans lequel une surface extérieure du manchon de renfort est dotée d'une structure en relief, de préférence d'une ou de plusieurs portions évidées.

13. Kit de pièces selon au moins une des revendications précédentes, dans lequel le manchon de renfort présente un contour au moins partiellement conique.

14. Kit de pièces selon au moins une des revendications précédentes, dans lequel le manchon de renfort comprend une fente continue s'étendant dans la direction axiale au travers du manchon.

15. Procédé de soudage d'une extrémité extérieure d'un conduit à un kit de pièces selon l'une quelconque des revendications précédentes, dans lequel le procédé comprend les étapes suivantes :
l'insertion et le placement du manchon de renfort (1) dans l'espace intérieur correspondant du tuyau d'accouplement (22) de l'accouplement (20) de manière que le contour du manchon de renfort se raccorde de manière sensiblement étroite à une paroi intérieure du tuyau d'accouplement,
le chauffage de l'extrémité extérieure du conduit et/ou le chauffage du tuyau d'accouplement de l'accouplement en utilisant un dispositif de chauffage, tel qu'un mandrin de soudage, à agencer dans le conduit et/ou sur une extrémité extérieure du tuyau d'accouplement,
le placement de l'extrémité extérieure du conduit dans l'espace d'insertion de l'accouplement sur le tuyau d'accouplement (22) afin de fusionner l'extrémité extérieure du conduit avec le tuyau d'accouplement de l'accouplement, et le fait de laisser ultérieurement refroidir le raccordement fusionné obtenu,
dans lequel pendant au moins un parmi le chauffage et l'insertion la paroi intérieure du tuyau d'accouplement (22) se déforme plastiquement en raison de la chaleur et/ou pression mécanique appliquée, et
ainsi la déformation et plus particulièrement la compression du manchon de renfort, et le maintien d'une extrémité extérieure du tuyau d'accouplement, et en particulier une extrémité extérieure formée en cône du tuyau d'accouplement, alignée sur le manchon de renfort pendant l'au moins un parmi le chauffage et l'insertion.
